# EUROPÄISCHE PATENTANMELDUNG

(11) **EP 4 792 990 A1**
(43) Veröffentlichungstag der Anmeldung: **19.08.2026**
(21) Anmeldenummer: 25157283.0
(22) Anmeldetag: 12.02.2025
(51) Int. Cl.: B25J 5/00, B25J 11/00, B25D 17/32, B25H 1/00

(54) **BAUROBOTER MIT OMNIDIREKTIONALEN RÄDERN ZUR BEARBEITUNG VON BODENFLÄCHEN**

(71) Anmelder: Hilti Aktiengesellschaft, 9494 Schaan (LI)
(72) Erfinder: Bralla, Dario, 9470 Buchs (CH); Schmidt, Peer, 88131 Lindau (DE)
(74) Vertreter: Hilti Aktiengesellschaft Corporate Intellectual Property

(57) **Zusammenfassung**

Die Erfindung betrifft einen kostengünstig herstellbaren und flexibel für Bauarbeiten an einer Bodenfläche (22) einsetzbaren Bauroboter (10) zur Bearbeitung einer Bodenfläche (22), umfassend eine Fahrplattform (12), wobei die Fahrplattform (12) wenigstens zwei motorisch antreibbare, omnidirektionale Räder (36, 38, 40) aufweist, eine an der Fahrplattform (12) angeordnete Hubvorrichtung (14) und eine an der Hubvorrichtung (14) angeordnete Werkzeugmaschinenaufnahme (16) zur Aufnahme einer nach unten gerichteten Werkzeugmaschine (18), beispielsweise einer Bohrhammermaschine.

## Beschreibung

Die vorliegende Erfindung betrifft einen Bauroboter zum Bearbeiten einer Bodenfläche.

### Stand der Technik

Aus EP3212363A2 ist ein Bauroboter, insbesondere eine robotische mobile Bohrvorrichtung, zum Bohren von Löchern in Decken und Wänden auf einer Baustelle bekannt.

### Offenbarung der Erfindung

Während die bekannte Bohrvorrichtung zum Bohren von Löchern in Decken und Wänden eingerichtet ist, besteht auf Baustellen, beispielsweise auf Hochbaubaustellen oder auf Tiefbaubaustellen, oftmals auch die Aufgabe, eine Vielzahl von Bohrungen in Bodenflächen zu bohren.

Um in hohen Höhen arbeiten zu können, weist die bekannte Bohrvorrichtung einen sehr weit ausfahrbaren, mehrachsigen Roboterarm auf, wodurch sich jedoch eine große Größe und ein hohes Gesamtgewicht der Bohrvorrichtung ergeben. Auch ist die bekannte Bohrvorrichtung dadurch teuer in der Herstellung.

Für Arbeiten an Bodenflächen, beispielsweise zum Bohren einer Vielzahl von Löchern in eine Bodenfläche, wäre dagegen eine Bohrvorrichtung wünschenswert, die flexibel einsetzbar und kostengünstig herstellbar wäre.

Aufgabe der vorliegenden Erfindung ist es daher, eine kostengünstige und flexibel einsetzbare Bohrvorrichtung zum Bearbeiten einer Bodenfläche anzubieten.

Gelöst wird die Aufgabe durch einen Bauroboter zur Bearbeitung einer Bodenfläche, der eine Fahrplattform, wobei die Fahrplattform wenigstens zwei motorisch antreibbare, omnidirektionale Räder aufweist, eine an der Fahrplattform angeordnete Hubvorrichtung und eine an der Hubvorrichtung angeordnete Werkzeugmaschinenaufnahme zur Aufnahme einer nach unten gerichteten Werkzeugmaschine, beispielsweise einer Bohrmaschine, umfasst.

Ein der Erfindung zugrunde liegender Gedanke ist dabei, anstelle eines mehrachsigen Roboterarmes eine strukturell einfach aufgebaute Hubvorrichtung vorzusehen. Die Hubvorrichtung kann in ihrer Funktionalität darauf beschränkt sein, eine in der Werkzeugmaschinenaufnahme aufgenommene Werkzeugmaschine auf eine Arbeitsposition der zu bearbeitenden Bodenfläche aufzusetzen und gegebenenfalls von dieser zu entfernen. Sie kann somit erheblich einfacher und damit leichter und kostengünstiger aufgebaut sein als beispielsweise ein mehrachsiger Roboterarm.

Die Richtungsangabe nach unten bedeutet vorliegend eine Richtung zur Bodenfläche.

Um eine zu bearbeitende Arbeitsposition auf der zu bearbeitenden Bodenfläche präzise zu erreichen, weist die Fahrplattform omnidirektionale Räder auf, durch die die Fahrplattform und damit die in der Werkzeugmaschinenaufnahme aufgenommene Werkzeugmaschine mit großer Genauigkeit und großer Wendigkeit positioniert werden können.

Somit kann der vorgestellte Bauroboter durch seine Spezialisierung auf die Bearbeitung von Bodenflächen besonders kostengünstig sein. Er kann ein erheblich geringeres Gewicht aufweisen und deutlich kleiner gebaut sein als beispielsweise ein Bauroboter mit einem langen, mehrachsigen Roboterarm. Dadurch kann der vorgestellte Bauroboter besonders wendig und dadurch besonders flexibel einsetzbar sein, sodass er Bauarbeiten selbst an ansonsten schwierig erreichbaren Arbeitspositionen ausführen kann.

Der Bauroboter kann eingerichtet sein, in drei Freiheitsgraden steuerbar zu sein. Insbesondere kann er mit zwei Freiheitsgraden auf der zu bearbeitenden Bodenfläche positionierbar sein. Einen zusätzlichen Freiheitsgrad kann seine Hubvorrichtung aufweisen, um die Werkzeugmaschine zur Bodenfläche hin oder von dieser weg zu bewegen. Durch eine geringe Anzahl an erforderlichen Freiheitsgraden benötigt der Bauroboter nur eine geringe Anzahl an Stellmotoren. Dies trägt zusätzlich zu geringen Herstellungskosten bei.

Um Bauarbeiten bis dicht an die Bodenfläche begrenzende Wände zu ermöglichen, können die Hubvorrichtung und / oder die Werkzeugmaschinenaufnahme an einer Außenkante der Fahrplattform angeordnet sein.

Die Fahrplattform kann dreieckig oder zumindest im Wesentlichen dreieckig sein. Insbesondere kann die Fahrplattform in einer Draufsicht auf den Bauroboter einen dreieckigen Umriss aufweisen. Der dreieckige Umriss kann auch einem abgerundeten Dreieck entsprechen.

Die Fahrplattform kann eine hohe Wendigkeit erreichen, wenn sie drei omnidirektionale Räder aufweist.

Eine besonders präzise Steuerung der omnidirektionalen Räder lässt sich erreichen, wenn die omnidirektionalen Räder Kugeln umfassen. Die Kugeln können durch jeweils zwei, insbesondere zueinander versetzt angeordnete, Reibräder angetrieben werden.

Die omnidirektionalen Räder können über Riemen angetrieben werden. Dadurch kann auf ein oder mehrere Getriebe verzichtet werden. Elektrische Motoren zum Antrieb der omnidirektionalen Räder können bei höheren Drehzahlen und somit besonders effizient betrieben werden. Durch ein, durch einen Riemenantrieb erzielbares, hohes Übersetzungsverhältnis können die omnidirektionalen Räder mit besonders hoher Stellgenauigkeit eingestellt werden, sodass sich der Bauroboter insgesamt besonders präzise positionieren lässt.

Vorteilhaft ist auch, wenn der Bauroboter weniger als 25 kg wiegt. Dies lässt sich beispielsweise durch entsprechende Dimensionierung des Bauroboters erreichen. Auch kann ausgenutzt werden, dass der Bauroboter durch seine Spezialisierung auf Bodenflächen im Vergleich zu beispielsweise den eingangs genannten Baurobotern für Bauarbeiten an Decken und Wänden lediglich Motoren geringer Leistung und damit geringen Gewichts benötigt. Selbst Motoren zur Steuerung der Hubvorrichtung können vergleichsweise leistungsschwach ausgebildet sein, da sie lediglich die Werkzeugmaschinenaufnahme mitsamt einer in der Werkzeugmaschinenaufnahme aufgenommenen Werkzeugmaschine insbesondere in der Vertikalen verlagern können sollten.

Ein Bauroboter mit einem derart geringen Gewicht kann durch eine einzelne Person getragen werden. Somit kann der Bauroboter von einer einzelnen Person beispielsweise von einer Etage in eine andere getragen werden. Somit lassen sich mit geringem Aufwand Bauarbeiten auf verschiedenen Etagen eines Bauwerks ausführen. Somit lässt sich der Bauroboter zusätzlich besonders flexibel einsetzen.

Insbesondere kann der Bauroboter weniger als beispielsweise 18 kg wiegen, sodass sein Gesamtgewicht mitsamt einer in der Werkzeugmaschinenaufnahme aufgenommenen Werkzeugmaschine, deren Gewicht im Regelfall höchstens 7 kg beträgt, wiederum geringer oder höchstens 25 kg ist. Somit kann eine einzelne Person den Bauroboter mitsamt der Werkzeugmaschine nahezu mühelos transportieren.

Denkbar ist, dass die Werkzeugmaschinenaufnahme ein Federelement aufweist. Das Federelement kann beispielsweise eine Metallfeder, einen Schaumstoff und / oder ein Gelkissen aufweisen. Das Federelement kann zur Dämpfung von Vibrationen der Werkzeugmaschine während ihres Betriebes ausgebildet sein.

Mit Hilfe des Federelements kann ein zusätzlicher Anpressdruck, insbesondere zusätzlich zu einer durch das eigene Gewicht bedingten Schwerkraft der Werkzeugmaschine, auf die Werkzeugmaschine ausgeübt werden. Das Federelement kann auch ein zusätzliches Spiel der Werkzeugmaschine in vertikaler Richtung relativ zur Hubvorrichtung, beispielsweise zum Ausgleich von Unebenheiten der Bodenfläche, ermöglichen.

Damit der Bauroboter selbsttätig eine Arbeitsposition lokalisieren kann, kann der Bauroboter einen Positionsdetektor aufweisen. Der Positionsdetektor kann zur absoluten Lokalisation und / oder zur relativen Lokalisation relativ zu einem Bezugspunkt eingerichtet sein. Der Positionsdetektor des Bauroboters kann auch lediglich einen Teil eines Positionsdetektionssystems bilden. Beispielsweise kann der Positionsdetektor ein Prisma aufweisen, das von einer Totalstation detektiert und lokalisiert werden kann.

Der Bauroboter kann besonders schwere Lasten transportieren, beispielsweise besonders schwere Werkzeugmaschinen und / oder Zusatzausstattungen wie beispielsweise Ablagemöglichkeiten für Ersatzwerkzeuge für die Werkzeugmaschine und / oder zusätzliche Werkzeugmaschinen, wenn die Fahrplattform wenigstens vier omnidirektionale Räder umfasst.

Der Bauroboter kann eine Steuerung aufweisen, die zur semiautonomen und / oder autonomen Positionierung des Bauroboters und / oder zur semiautonomen und / oder autonomen Durchführung einer Bauarbeit an einer Bodenfläche durch den Bauroboter eingerichtet ist.

Für einen autonomen und / oder semiautonomen Betrieb kann der Bauroboter auch optische und / oder nichtoptische Sensoren zur Überwachung einer Umgebung des Bauroboters aufweisen. Die Sensoren können beispielsweise ein oder mehrere LIDAR, zweidimensionale und / oder dreidimensionale Kameras, UltraschallSensoren und / oder dergleichen umfassen.

Denkbar ist weiter, dass der Bauroboter zwei Hubvorrichtungen mit jeweils einer Werkzeugmaschinenaufnahme zur Aufnahme einer nach unten gerichteten Werkzeugmaschine, beispielsweise vertikal nach unten gerichtet, aufweist. Dann ist denkbar, dass eine der beiden Werkzeugmaschinen mit einem kleinen Bohrer ausgestattet sein kann, beispielsweise einem Bohrer von höchstens 8 mm Durchmesser, während die andere Werkzeugmaschine mit einem größeren Bohrer, insbesondere mit einem Bohrer mit einem final zu erreichenden Durchmesser des zu bohrenden Lochs, ausgestattet ist.

Eine solche Kombination ermöglicht es, mit der ersten Werkzeugmaschine ein Loch vorzubohren und dann mit der zweiten Werkzeugmaschine final ein Loch mit dem endgültigen Durchmesser zu bohren.

**In** einer Ausführungsform ist vorgesehen, dass die Werkzeugmaschine vertikal nach unten gerichtet ausgerichtet ist und somit vertikal gegenüber der Bodenfläche ausgerichtet ist.

**In** einer Ausführung ist vorgesehen, dass die Neigung der Werkzeugmaschine im Bezug zur Bodenfläche eingestellt wird. Der Bauroboter kann eingereicht sein, dass die Hubvorrichtung schwenkbar zur Fahrplattform ausgebildet ist. Dazu kann die Hubvorrichtung ein Hubvorrichtungsgelenk aufweisen, das mittels Motor antreibbar ist. Eine Steuerung kann zur Betätigung und zum Steuern des Motors vorgesehen sein. Alternativ oder zusätzlich kann die Werkzeugaufnahme relativ zur Hubvorrichtung schwenkbar an dieser angeordnet sein. Dazu kann die Werkzeugaufnahme ein Werkzeugaufnahmegelenk aufweisen, das mittels Motor betätigt wird und vorzugsweise über eine Steuerung gesteuert wird. Je nach Arbeitsaufgabe ist somit der Bauroboter flexibel in der Umsetzung.

Denkbar ist auch, dass eine Werkzeugmaschine zum Bohren mit Schlag und die andere Werkzeugmaschine zum Bohren ohne Schlag eingerichtet ist. Dann kann beispielsweise ohne Schlag eine beispielsweise aus Gestein gebildete Bodenfläche angebohrt werden und das restliche Loch mit Schlag gebohrt werden. Dadurch lassen sich Löcher mit einem besonders sauberen Rand bohren, insbesondere kann ein Ausfransen des Lochrandes vermieden oder zumindest reduziert werden.

Die beiden Werkzeugmaschinen können gewechselt werden, in dem der Bauroboter gegebenenfalls geeignet rangiert und / oder sich gegebenenfalls um eine vertikale Achse dreht.

Die Werkzeugmaschine kann eine Maschine zum Bohren von Löchern sein, beispielsweise eine Schlagbohrmaschine, ein Bohrhammer, ein Bohrschrauber oder Schlagschrauber, ein Trennschleifer, eine Sägemaschine, ein Markiergerät und/ oder ein Staubsauger und/ oder ein Anschluss zum Absaugen sein.

Bei einer Klasse von Ausführungsformen können die omnidirektionalen Räder als Rollen-basierte Räder ausgebildet sein. Derartige Räder können selbst in besonders staubigen Umgebungen eingesetzt werden.

Bei einer weiteren denkbaren Ausführungsform der omnidirektionalen Räder können diese als differentielle Ausweichantriebe (englisch: "differential swerve drive") ausgebildet sein. Solche omnidirektionale Räder können durch zwei Zahnräder angetrieben werden, die wiederum durch zwei in ihren Drehrichtungen und Drehgeschwindigkeiten einstellbaren äußeren Zahnrädern angetrieben werden. Je nach relativer Drehrichtung und Drehgeschwindigkeit der äußeren Zahnräder zueinander rotieren die Räder um eine Hochachse und ändern somit ihre Fahrrichtung und / oder rotieren die Räder um ihre Radachsen und bewegen sich somit nach vorne oder hinten relativ zur Bodenfläche.

Weitere Merkmale und Vorteile der Erfindung ergeben sich aus der nachfolgenden detaillierten Beschreibung eines Ausführungsbeispiels der Erfindung anhand der Figuren der Zeichnung, die erfindungswesentliche Einzelheiten zeigen, sowie aus den Ansprüchen.

Die einzelnen Merkmale können je einzeln für sich oder zu mehreren in beliebigen Kombinationen bei Varianten der Erfindung verwirklicht sein. **In** der schematischen Zeichnung sind Ausführungsbeispiele der Erfindung dargestellt, welche in der nachfolgenden Beschreibung näher erläutert werden.

### Kurze Beschreibung der Zeichnungen

Es zeigen:
- Fig. 1: ein Bauroboter in einer perspektivischen Darstellung von schräg oben,
- Fig. 2: der Bauroboter gemäß Fig. 1, jedoch ohne Hubvorrichtung und Werkzeugmaschine,
- Fig. 3: der Bauroboter gemäß Fig. 2 in einer perspektivischen Darstellung von schräg unten,
- Fig. 4: eine Fahrplattform in einer schematischen Darstellung von unten, wobei die Fahrplattform Kugeln als Räder und Riemenantriebe zum Antrieb der Räder aufweist,
- Fig. 5: eine Hubvorrichtung mit einer Werkzeugmaschine in einer perspektivischen Darstellung von schräg oben,
- Fig. 6: die Hubvorrichtung gemäß Fig. 5 in einer Querschnittsansicht und
- Fig. 7: eine weitere Hubvorrichtung in einer Querschnittsansicht.

Zur Erleichterung des Verständnisses der Erfindung werden in der nachfolgenden Figurenbeschreibung für sich entsprechende Elemente jeweils die gleichen Bezugszeichen verwendet.

### Ausführungsformen der Erfindung

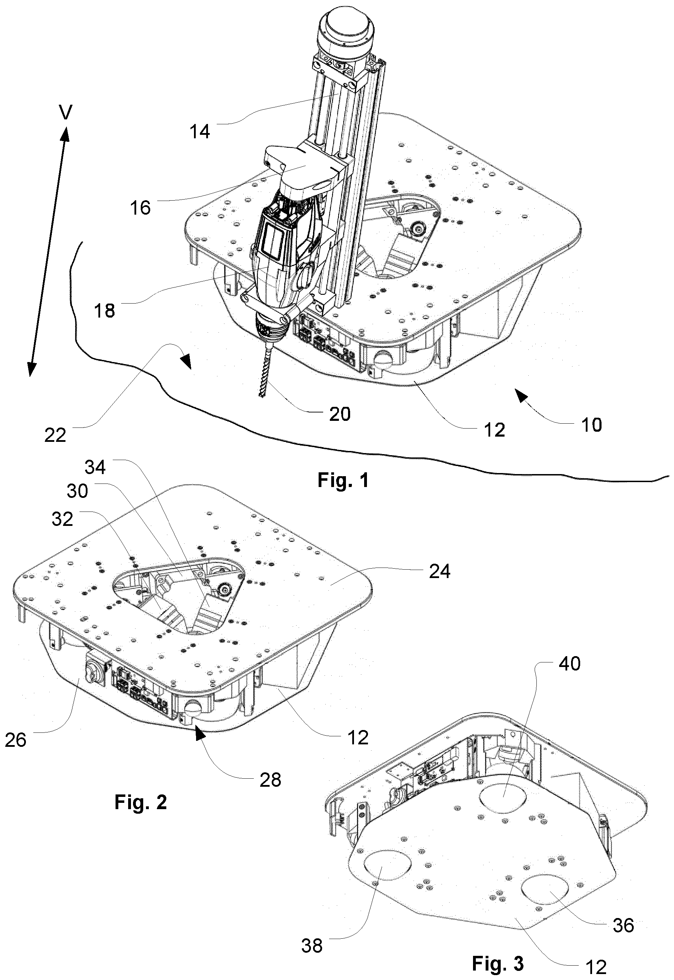

Fig. 1 zeigt einen Bauroboter 10. Der Bauroboter 10 ist, wie nachfolgend im Detail erläutert, zur Bearbeitung einer Bodenfläche ausgebildet.

Er weist eine Fahrplattform 12 auf, an der eine Hubvorrichtung 14 angeordnet ist. Die Hubvorrichtung 14 weist eine Werkzeugmaschinenaufnahme 16 auf, in der eine Werkzeugmaschine 18 aufgenommen ist. Die Werkzeugmaschine 18 ist eine Handwerkzeugmaschine in Form einer Gesteinsbohrmaschine, insbesondere eine elektropneumatische Bohrhammermaschine. Sie weist ein Werkzeug 20 in Form eines Hartmetall-bestückten Gesteinsbohrers auf.

Die Hubvorrichtung 14 ist eingerichtet, die Werkzeugmaschinenaufnahme 16 in einer vertikalen Richtung V zu verlagern. Dadurch kann der Bauroboter 10 die Werkzeugmaschine 18 auf eine Bodenfläche 22, auf der sich der Bauroboter 10 befindet, aufsetzen oder von dieser abheben.

Fig. 2 zeigt die Fahrplattform 12 in einer perspektivischen Ansicht von schräg oben.

Auf ihrer Oberseite befindet sich eine Abdeckplatte 24. Zwischen der Abdeckplatte 24 und einer Bodenplatte 26 befindet sich ein Antrieb 28 der Fahrplattform 12.

Der Antrieb 28 weist unter anderem drei Motoren 30, 32 und 34 zum Antrieb von omnidirektionalen Rädern auf.

Fig. 3 zeigt die Fahrplattform 12 in einer perspektivischen Ansicht von schräg unten. Drei omnidirektionale Räder 36, 38 und 40. Die omnidirektionale Räder 36, 38 und 40 sind jeweils als Kugeln ausgebildet.

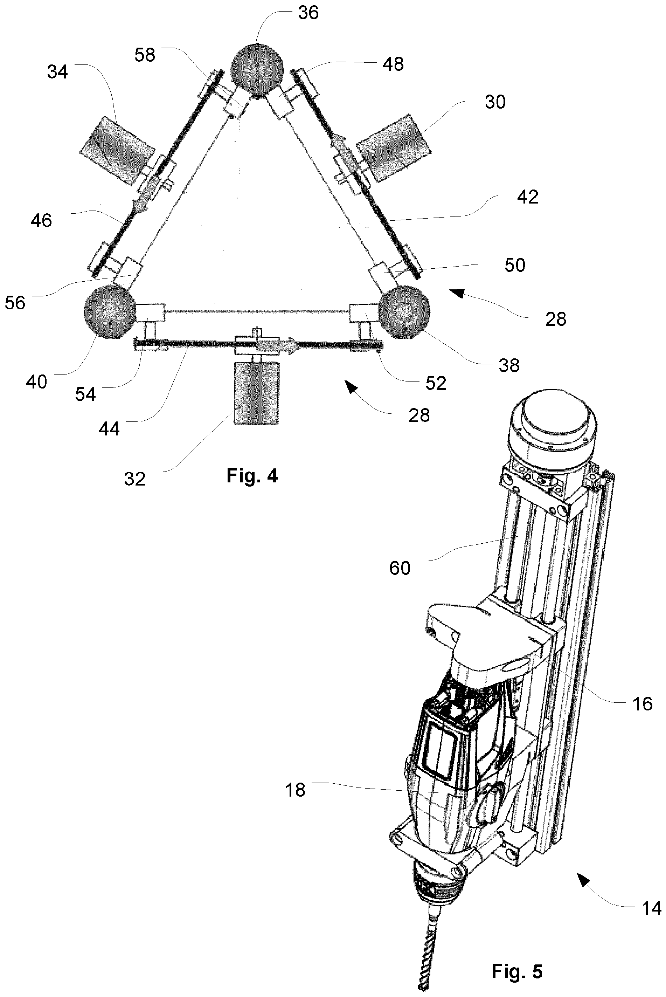

Fig. 4 zeigt den Antrieb 28 in einer schematischen Ansicht von unten.

Zu erkennen ist, dass die omnidirektionalen Räder 36, 38 und 40 durch die Motoren 30, 32 und 34 indirekt über Riemen 42, 44 und 46 angetrieben werden.

Jeder der Motoren 30, 32 und 34 wirkt über jeweils einen der Riemen 42, 44 und 46 und von diesen angetriebenen Reibrädern 48, 50, 52, 54, 56, 58 auf jeweils zwei der omnidirektionalen Räder 36, 38 und 40.

Je nach Drehrichtung und Drehgeschwindigkeit der Motoren 30, 32 und 34 lässt sich somit die Fahrplattform 12 und damit der Bauroboter 10 in alle Richtungen in der Bildebene aus Fig. 4 verfahren.

Die Motoren 30, 32 und 34 sind als Schrittmotoren ausgebildet, sodass die Fahrplattform 12 hochpräzise, insbesondere mit einer Stellgenauigkeit von besser als 1 mm in jeder Richtung der Bildebene aus Fig. 4, positioniert werden kann.

Fig. 5 zeigt in einer perspektivischen Darstellung die Hubvorrichtung 14.

Bei der Hubvorrichtung 14 ist die Werkzeugmaschinenaufnahme 16 an einem elektromotorischen Linearantrieb 60 montiert.

In der Werkzeugmaschinenaufnahme 16 ist die Werkzeugmaschine 18, also die Bohrhammermaschine, aufgenommen.

Durch Verfahren der Werkzeugmaschinenaufnahme 16 entlang des Linearantriebs 60 kann somit die Werkzeugmaschine 18 parallel zum Linearantrieb 60 verlagert werden.

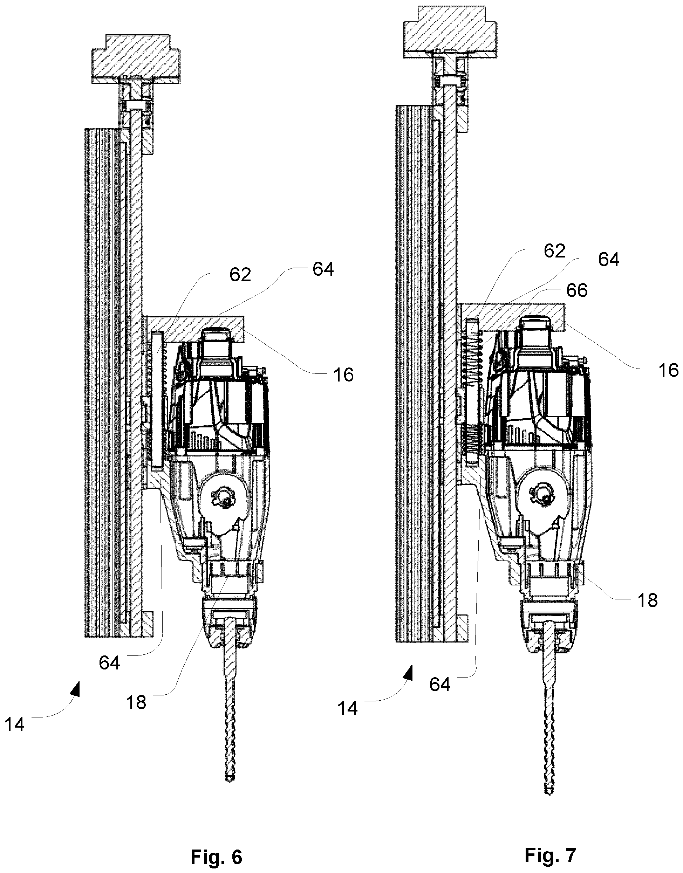

Fig. 6 und Fig. 7 zeigen Querschnitte durch verschiedene Hubvorrichtungen 14 mit Werkzeugmaschinenaufnahmen 16. Zwischen jeweils zwei Haltebacken 64 ist jeweils eine Werkzeugmaschine 18 gehalten und damit in der Werkzeugmaschinenaufnahmen 16 aufgenommen.

Bei der Ausführungsform gemäß Fig. 6 sind die Haltebacken 64 über einen Haltestift 62 starr mit der übrigen Werkzeugaufnahme 16 verbunden.

Bei der Ausführungsform gemäß Fig. 7 sind im Unterschied zur vorangehenden Ausführungsform die Haltebacken 64 über ein Federelement 66 federnd am Haltestift 62 und damit auch relativ zur übrigen Werkzeugaufnahme 16 gelagert.

### Bezugszeichenliste

- 10: Bauroboter
- 12: Fahrplattform
- 14: Hubvorrichtung
- 16: Werkzeugmaschinenaufnahme
- 18: Werkzeugmaschine
- 20: Werkzeug
- 22: Bodenfläche
- 24: Abdeckplatte
- 26: Bodenplatte
- 28: Antrieb
- 30: Motor
- 32: Motor
- 34: Motor
- 36: Rad
- 38: Rad
- 40: Rad
- 42: Riemen
- 44: Riemen
- 46: Riemen
- 48: Reibrad
- 50: Reibrad
- 52: Reibrad
- 54: Reibrad
- 56: Reibrad
- 58: Reibrad
- 60: Linearantrieb
- 62: Haltestiftelement
- 64: Haltebacke
- 66: Federelement
- V: vertikale Richtung

## Patentansprüche

1. Bauroboter (10) zur Bearbeitung einer Bodenfläche (22), umfassend
- eine Fahrplattform (12), wobei die Fahrplattform (12) wenigstens zwei motorisch antreibbare, omnidirektionale Räder (36, 38, 40) aufweist,
- eine an der Fahrplattform (12) angeordnete Hubvorrichtung (14) und
- eine an der Hubvorrichtung (14) angeordnete Werkzeugmaschinenaufnahme (16) zur Aufnahme einer nach unten gerichteten Werkzeugmaschine (18), beispielsweise einer Bohrhammermaschine.

2. Bauroboter (10) nach dem vorhergehenden Patentanspruch, **dadurch gekennzeichnet, dass** die Hubvorrichtung (14) und / oder die Werkzeugmaschinenaufnahme (16) an einer Außenkante der Fahrplattform (12) angeordnet sind.

3. Bauroboter (10) nach einem der vorhergehenden Patentansprüche,
**dadurch gekennzeichnet, dass** die Fahrplattform (12) dreieckig oder zumindest im Wesentlichen dreieckig ist.

4. Bauroboter (10) nach einem der vorhergehenden Patentansprüche,
**dadurch gekennzeichnet, dass** die Fahrplattform (12) drei omnidirektionale Räder (36, 38, 40) aufweist.

5. Bauroboter (10) nach einem der vorhergehenden Patentansprüche,
**dadurch gekennzeichnet, dass** die omnidirektionale Räder (36, 38, 40) Kugeln umfassen.

6. Bauroboter (10) nach einem der vorhergehenden Patentansprüche,
**dadurch gekennzeichnet, dass** die omnidirektionalen Räder (36, 38, 40) über Riemen (42, 44, 46) angetrieben werden.

7. Bauroboter (10) nach einem der vorhergehenden Patentansprüche,
**dadurch gekennzeichnet, dass** der Bauroboter (10) weniger als 25 kg, insbesondere weniger als 18 kg, wiegt.

8. Bauroboter (10) nach einem der vorhergehenden Patentansprüche,
**dadurch gekennzeichnet, dass** die Werkzeugmaschinenaufnahme (16) ein Federelement (66) aufweist.

9. Bauroboter (10) nach einem der vorhergehenden Patentansprüche,
**dadurch gekennzeichnet, dass** der Bauroboter (10) einen Positionsdetektor aufweist.

10. Bauroboter (10) nach einem der vorhergehenden Patentansprüche,
**dadurch gekennzeichnet, dass** die Fahrplattform (12) wenigstens vier omnidirektionale Räder (36, 38, 40) umfasst.

11. Bauroboter (10) nach einem der vorhergehenden Patentansprüche,
**dadurch gekennzeichnet, dass** der Bauroboter (10) eine Steuerung aufweist, die zur semiautonomen und / oder autonomen Positionierung des Bauroboters und / oder zur semiautonomen und / oder autonomen Durchführung einer Bauarbeit an der Bodenfläche (22) durch den Bauroboter (10) eingerichtet ist.

12. Bauroboter (10) nach einem der vorhergehenden Patentansprüche,
**dadurch gekennzeichnet, dass** der Bauroboter (10) zwei Hubvorrichtungen (14) mit jeweils einer Werkzeugmaschinenaufnahme (16) zur Aufnahme einer nach unten gerichteten Werkzeugmaschine (18) aufweist.

13. Bauroboter (10) nach einem der vorhergehenden Patentansprüche,
**dadurch gekennzeichnet, dass** die omnidirektionalen Räder (36, 38, 40) als Rollen-basierte Räder ausgebildet sind.
